# EUROPÄISCHE PATENTSCHRIFT

(11) **EP 1 493 368 B1**
(45) Veröffentlichungstag und Bekanntmachung des Hinweises auf die Patenterteilung: **26.10.2005**
(21) Anmeldenummer: 04405336.1
(22) Anmeldetag: 02.06.2004
(51) Int. Cl.: A47J 42/16, A47J 42/20

(54) **Kaffeemühle für eine Kaffeemaschine**
Coffee mill for a coffee machine
Moulin à café pour une machine à café

(30) Priorität: 30.06.2003 CH 11522003
(43) Veröffentlichungstag der Anmeldung: 05.01.2005
(73) Patentinhaber: Saeco IPR Limited, Dublin 12 (IE)
(72) Erfinder: Turi, Mariano, 8046 Zürich (CH)
(74) Vertreter: Rottmann, Maximilian

(56) Entgegenhaltungen:
- EP-B- 1 065 962
- DE-A- 19 839 917
- DE-C- 945 410
- US-A- 5 761 993
- US-A- 6 164 574

## Beschreibung

Die vorliegende Erfindung betrifft eine Kaffeemühle für eine Kaffeemaschine nach dem Oberbegriff des Anspruchs 1.

Mahlwerke gattungsgemässer Kaffeemühlen bestehen weitgehend aus Kunststoff, wobei die Mahlscheiben aus einem harten und abriebfesten Material, beispielsweise aus gehärtetem Stahl, gefertigt sind. Die Qualität des gemahlenen Kaffees hängt dabei insbesondere auch von Verschleissfestigkeit der im Mahlwerk zum Einsatz kommenden Mahlscheiben ab, da mit zunehmender Abnützung der Mahlscheiben u.a. die Korngrösse des gemahlenen Kaffees starken Schwankungen unterliegt und die Qualität sowohl des gemahlenen Kaffees, wie insbesondere auch des damit hergestellten Kaffeegetränks, nachlässt. Um die Mahlscheiben zu befestigen, sind diese üblicherweise mit mehreren Bohrungen versehen, welche durch die Mahlscheiben hindurch verlaufen und zur Aufnahme von Befestigungsmitteln wie Schrauben, Nieten oder dergleichen ausgebildet sind. Ein Nachteil solcher Befestigungs-Bohrungen ist darin zu sehen, dass sie einen namhaften Anteil der theoretisch zur Verfügung stehenden Mahloberfläche beanspruchen und die Verzahnung der Mahlscheiben dadurch unterbrochen wird. Zudem ist es umso schwieriger, die Mahlscheiben mit Befestigungs-Bohrungen zu versehen, je härter die Mahlscheiben sind. Befestigungs-Bohrungen haben den weiteren Nachteil, dass sich in ihnen wie auch in den Befestigungsmitteln Kaffeestaub ansammeln kann, was aus hygienischer Sicht unerwünscht ist.

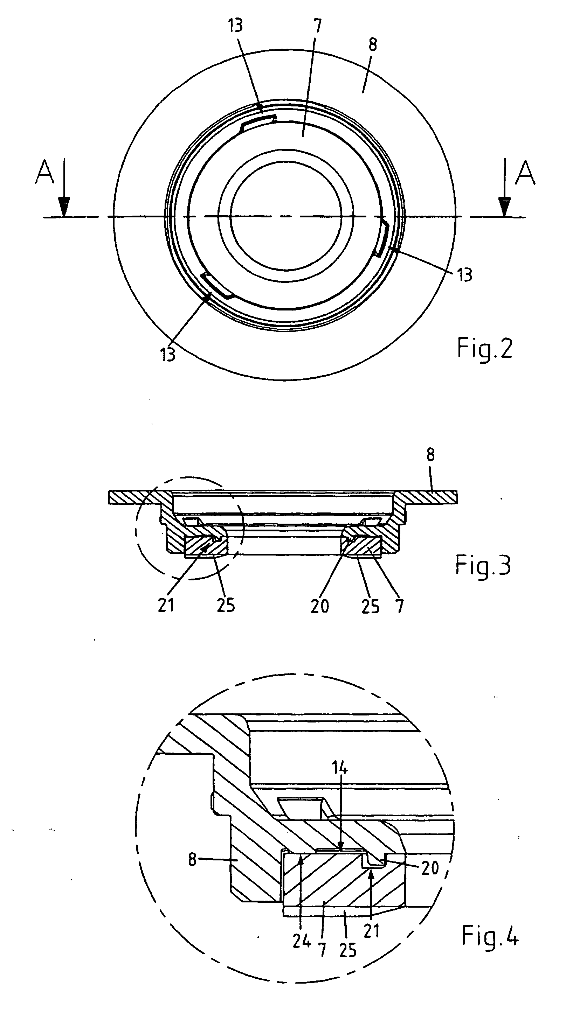

Aus der EP 1 065 962 ist eine Kaffeemühle mit einem gattungsgemässen Mahlwerk bekannt. Das Mahlwerk ist mit einem konischen Zahnrad sowie zwei koaxial dazu angeordnete Mahlscheiben mit spiralenähnlicher Verzahnung versehen. Die eine Mahlscheibe ist fest und die andere drehbar angeordnet. Beide Mahlscheiben sind mit Befestigungs-Bohrungen zur Aufnahme von Schrauben versehen, mittels welche die jeweilige Mahlscheibe an einer Halterung befestigt wird. Wie insbesondere aus der Fig. 4 ersichtlich ist, durchsetzen die Befestigungs-Bohrungen (1220) die Verzahnung der jeweiligen Mahlscheibe.

Aus der US 6,164,574 ist eine Pfeffer- oder Salzmühle bekannt, die mit einem zwei Mahlscheiben umfassenden Mahlwerk versehen ist. Die untere Mahlscheibe ist drehfest in der Mühle fixiert, während die obere Mahlscheibe über eine Drehachse mit einem oberen, manuell drehbaren Teil der Mühle verbunden ist. Zum Fixieren der jeweiligen Mahlscheibe in einer Halterung ist eine Schnappverbindung vorgesehen. Die Mahlscheiben sind dazu mit vier entlang des äusseren Rands angeordneten Vertiefungen versehen, in welche korrespondierend an der jeweiligen Halterung angebrachte Nocken eingreifen. Nachteilig an einer derartigen Schnappverbindung ist, dass die Mahlscheiben weder in axialer noch in radialer Richtung exakt positioniert werden können und sich unter dem Einfluss des beim Mahlen auf sie einwirkenden Drehmoments allenfalls bewegen und verschieben können.

Die Aufgabe der Erfindung besteht nun darin, eine nach dem Oberbegriff des Anspruchs 1 ausgebildete Kaffeemühle für eine Kaffeemaschine derart zu gestalten, dass die jeweilige Mahlscheibe keine sie durchsetzenden Befestigungs-Bohrungen aufweist aber trotzdem exakt und spielfrei fixierbar ist.

Diese Aufgabe wird durch die im Kennzeichen des Anspruchs 1 angeführten Merkmale gelöst.

Indem die jeweilige Mahlscheibe mittels eines Drehverschlusses in der jeweiligen Aufnahme aufgenommen ist, wird die zur Verfügung stehende Mahloberfläche erhöht, da auf Befestigungsbohrungen verzichtet werden kann. Aber auch das aufwändige Bohren solcher Befestigungs-Bohrungen kann entfallen, was insbesondere bei sehr harten Mahlscheiben von Vorteil ist. Ausserdem wird sichergestellt, dass sich die Mahlscheiben durch das auf sie einwirkende Drehmoment nicht lösen, sondern in der jeweiligen Aufnahme fixiert und positioniert werden. Schliesslich wird durch diese Massnahmen auch der Hygiene im Mahl- und Schneidbereich Rechnung getragen.

Bei einer bevorzugten Ausführungsform der Erfindung werden Mahlscheiben mit radialen Fortsätzen vorgeschlagen, die mit den in der Aufnahme angeordneten Ausnehmungen im Sinne eines Bajonettverschlusses zusammenzuarbeiten bestimmt sind. Derart ausgebildete Mahlscheiben können schnell und einfach in der Aufnahme fixiert werden.

Nachfolgend wird ein Ausführungsbeispiel der Erfindung anhand einer Zeichnung näher erläutert. In dieser Zeichnung zeigt:
- Fig. 1: eine Explosionsdarstellung der Kaffeemühle;
- Fig. 2: eine Draufsicht auf die Aufnahme mit einer daran fixierten Mahlscheibe;
- Fig. 3: einen Längsschnitt durch die Aufnahme und die daran fixierte Mahlscheibe gemäss der Fig. 2, und
- Fig. 4: einen vergrösserten Ausschnitt aus der Fig. 3.

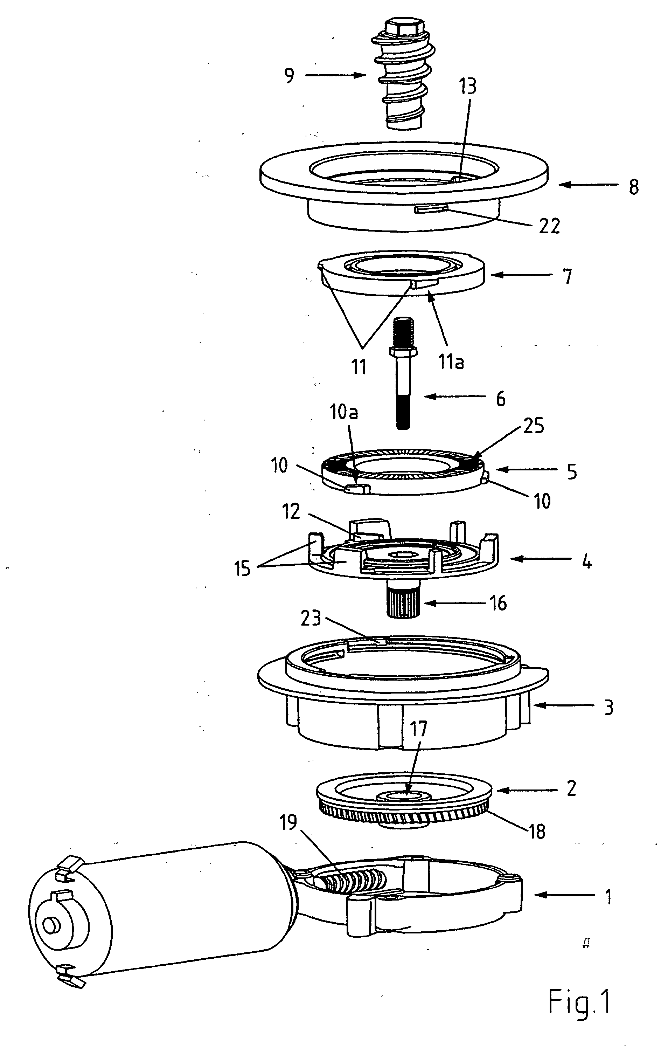

Die Kaffeemühle nach der Fig. 1 besteht im wesentlichen aus einem elektrischen Antriebsmotor 1, einem Drehteller 2, einem Gehäuse 3, einer unteren Aufnahme 4, einer unteren Mahlscheibe 5, einer Achse 6, einer oberen Mahlscheibe 7, einer oberen Aufnahme 8 sowie einer Einzugsschnecke 9. Die zum Befestigen der genannten Teile notwendigen Schrauben sowie weitere Elemente wie Dichtringe, Lager etc. sind zugunsten einer guten Übersichtlichkeit nicht dargestellt.

Da der Aufbau und die Wirkungsweise derartiger Kaffeemühlen grundsätzlich bekannt ist, wird nachfolgend hauptsächlich auf die im Zusammenhang mit der Erfindung wesentlichen Merkmale eingegangen.

Die beiden vorzugsweise aus Kunststoff bestehenden Aufnahmen 4, 8 dienen der Aufnahme und Fixierung der beiden Mahlscheiben 5, 7. Anstelle von Befestigungsbohrungen, wie sie bei den nach dem Stand der Technik ausgebildeten Mahlscheiben üblich sind, verfügen beide Mahlscheiben 5, 7 über radiale Fortsätze 10, 11, welche dem Fixieren in der jeweiligen Aufnahme 4, 8 dienen. Die Aufnahmen 4, 8 sind mit zu den Fortsätzen korrespondierenden Ausnehmungen 12, 13 versehen, in welche die radialen Fortsätze 10, 11 der Mahlscheiben 5, 7 einzugreifen bestimmt sind, um zusammen mit diesen einen Drehverschluss, namentlich einen Bajonettverschluss zu bilden. Die in den Aufnahmen 4, 8 vorgesehenen Ausnehmungen 12, 13 sind allerdings nur andeutungsweise ersichtlich. Sowohl die Ausnehmungen 12, 13 wie auch die Fortsätze 10, 11 sind mit einer schräg zulaufenden Keilfläche 10a, 11a versehen, welche die jeweilige Mahlscheibe 5, 7 beim Fixieren in der Aufnahme 4, 8 in axialer Richtung, d.h. in Richtung der Längsmittelachse des Mahlwerks in die jeweilige Aufnahme hineindrückt.

Die untere Aufnahme 4 weist sechs vertikal verlaufende Fortsätze 15 auf. Davon sind deren drei mit den schlitzförmigen Ausnehmungen 12 versehen, die der Aufnahme und Fixierung der unteren Mahlscheibe 5 an deren radialen Fortsätzen 10 dienen. Die obere Aufnahme 8 ist ebenfalls mit drei schlitzförmigen Ausnehmungen 13 versehen, die der Aufnahme und Fixierung der oberen Mahlscheibe 7 an deren radialen Fortsätzen 11 dienen. Die schlitzförmigen Ausnehmungen 12, 13 sowohl der unteren wie auch der oberen Aufnahme 4, 8 sind aus dieser Darstellung jedoch nur ansatzweise ersichtlich. Die schlitzförmigen Ausnehmungen 12, 13 bilden zusammen mit den radialen Fortsätzen 10, 11 der jeweiligen Mahlscheibe 5, 7 eine Art Bajonettverschluss und sind derart gestaltet, dass die Mahlscheiben 5, 7 durch das beim Mahlvorgang auf sie einwirkende Drehmoment in den Ausnehmungen 12, 13 fixiert werden. Zur radialen Zentrierung der jeweiligen Mahlscheibe 5, 7 ist diese mit einer ringförmigen Vertiefung und die Aufnahme mit einer korrespondierenden Erhebung versehen, wie nachfolgend anhand der Fig. 3 noch näher erläutert wird.

Die beiden Mahlscheiben 5, 7 sind an der Oberfläche, d.h. auf der jeweiligen, der anderen Mahlscheibe zugewandten Seite, mit einer Verzahnung zum Mahlen der Kaffeebohnen versehen, wobei aus der Darstellung gemäss Fig. 1 nur die Verzahnung 25 der unteren Mahlscheibe 5 ersichtlich ist. Die beiden Mahlscheiben 5, 7 bestehen vorzugsweise aus einem keramischen Grundmaterial, welches sehr verschleissfest ist und gegenüber Hartmetallscheiben eine markant höhere Lebensdauer aufweist, so dass die Mahlscheiben 5, 7 auch bei hoher Beanspruchung nicht mehr ausgetauscht werden müssen. Durch die an den Mahlscheiben 5, 7 vorgesehenen Fortsätze 10, 11 kann zudem gänzlich auf Befestigungsbohrungen in den Mahlscheiben 5, 7 verzichtet werden, was zu einer markant grösseren Mahloberfläche führt und insbesondere bei Mahlscheiben aus einem keramischen Grundmaterial sehr vorteilhaft ist, da auf ein aufwändiges Bohren verzichtet werden kann.

Um eine kraftschlüssige Verbindung der unteren Aufnahme 4 mit dem vom Antriebsmotor 1 angetriebenen Drehteller 2 sicherzustellen, weist die untere Aufnahme 4 einen mit einer Aussenverzahnung versehenen Fortsatz 16 auf, der formschlüssig in eine mit einer Innenverzahnung versehene Bohrung 17 des Drehtellers 2 einzugreifen bestimmt ist. Der Drehteller 2 wird über den Antriebsmotor 1 angetrieben, indem dessen Schneckenrad 19 in die Aussenverzahnung 18 des Drehtellers 2 eingreift.

Die obere Aufnahme 8 hingegen ist drehfest angeordnet, indem sie mit dem Gehäuse 3 verbunden ist. Zum Fixieren der oberen Aufnahme 8 am Gehäuse 3 ist diese mit Nocken 22 versehen, welche in korrespondierende Ausnehmungen 23 im Gehäuse 3 einzugreifen bestimmt sind. Die obere Einzugsschnecke 9 wird schliesslich auf das Gewinde der Achse 6 aufgeschraubt, welch letztere mittels einer nicht dargestellten Mutter am Drehteller 2 fixiert wird. Auf der Unterseite des Drehtellers 2 sind vorzugsweise Magnete (nicht dargestellt) angebracht, welche mit einem am Gehäuse des Motors 1 angeordneten Sensor (nicht dargestellt) im Sinne eines Hall-Gebers zum Messen der Anzahl Umdrehungen zusammenwirken. Die von der unteren Mahlscheibe 5 während des Mahlvorgangs ausgeführte Anzahl Umdrehungen kann als Mass zur Bestimmung der Menge an gemahlenem Kaffee herangezogen werden.

Die Fig. 2 zeigt eine Draufsicht auf die obere Aufnahme 8 mit daran fixierter Mahlscheibe 7, während die Fig. 3 einen Schnitt durch die Aufnahme gemäss_Fig. 2 entlang der Linie A-A zeigt. In der Fig. 2 sind die in die obere Aufnahme 8 eingelassenen schlitzförmigen Ausnehmungen 13 ersichtlich, in welchen die obere Mahlscheibe 7 mit ihren Fortsätze 10 (Fig. 1) fixiert wird. Aus der Fig. 3 ist insbesondere die zur Zentrierung der Mahlscheibe 7 an der oberen Aufnahme 8 angeordnete ringförmige Erhebung 20 sowie die korrespondierende, in die Mahlscheibe 7 eingelassene Vertiefung 21 ersichtlich. Beim Einsetzen der Mahlscheibe 7 greift die Erhebung 20 der Aufnahme 8 in die Vertiefung 21 der Mahlscheibe 7 ein und richtet diese in radialer Richtung aus. Entsprechende Erhebungen bzw. Vertiefungen sind an der unteren Mahlscheibe und der dazugehörigen Aufnahme ebenfalls vorgesehen, so dass die beiden Mahlscheiben nach dem Zusammenbauen der Kaffeemühle koaxial angeordnet sind. Die Verzahnung 25 der Mahlscheibe 7 ist ansatzweise ersichtlich.

Fig. 4 zeigt einen vergrösserten Ausschnitt aus der Fig. 3. Aus dieser Darstellung ist ersichtlich, dass die Mahlscheibe 7 mit einer planen Rückseite 14 versehen ist, welche u.a. als Auflagefläche dient. Die Aufnahme 8 ihrerseits ist meiner einer ringförmigen, der Mahlscheibe 7 zugewandte Abstützfläche 24 versehen, an welcher sich die Mahlscheibe 7 in axialer Richtung, d.h. in Richtung der Längsmittelachse des Mahlwerks, abstützt. Die Abstützfläche 24 dient dabei gleichzeitig dem Positionieren der Mahlscheibe 7 in axialer Richtung. Durch das beim Mahlen auf die Mahlscheibe 7 einwirkende Drehmoment wird diese in Schliessrichtung belastet, d.h. durch die Drehrichtung des Antriebs und die Gestaltung des Drehverschlusses wird die Mahlscheibe 7 in Eindrehrichtung belastet. Dadurch wird die Mahlscheibe 7 in der Aufnahme 8 fixiert und sichergestellt, dass sie sich nicht ungewollt löst. Durch diese Belastung wird zudem sichergestellt, dass die Rückseite 14 der Mahlscheibe 7 gegen die Abstützfläche 24 der Aufnahme 8 gedrückt wird und spielfrei an dieser anliegt. Dadurch kann sich kein Kaffeestaub zwischen der Aufnahme 8 und der Mahlscheibe 7 ansammeln. Vorgängige Ausführungen treffen natürlich ebenso auf die in der unteren Aufnahme 4 aufgenommene Mahlscheibe 5 zu. Die Verzahnung 25 der Mahlscheibe 7 ist wiederum ansatzweise ersichtlich.

Im weiteren ist die ringförmige Erhebung 20 der Aufnahme 8 ersichtlich, welche in die in die Mahlscheibe 7 eingelassene Vertiefung 21 eingreift und die Mahlscheibe 7 in radialer Richtung in Bezug auf die Aufnahme 8 positioniert.

Anstelle des vorgängig erläuterten Bajonettverschlusses mit radialen Fortsätzen können natürlich auch andere Drehverschlüsse zum Fixieren der jeweiligen Mahlscheibe vorgesehen werden. Beispielsweise könnte auch ein Gewinde zum Fixieren der jeweiligen Mahlscheibe vorgesehen werden. Andererseits können die Befestigungsmittel auch axial, insbesondere auf der der Aufnahme zugewandten Rückseite, an der Mahlscheibe angeordnet werden. Auch ein zentrale Anordnung eines Fortsatzes oder mehrerer Fortsätze wäre möglich. Es versteht sich, dass die Befestigungsmittel auch in kinematischer Umkehr umgekehrt angeordnet werden können, indem die jeweilige Mahlscheibe mit einer Ausnehmung bzw. mehreren Ausnehmungen und die zugehörige Aufnahme mit einem korrespondierenden Fortsatz bzw. mehreren Fortsätzen versehen ist.

## Patentansprüche

1. Kaffeemühle für eine Kaffeemaschine, mit zwei koaxial angeordneten Mahlscheiben (5, 7), wobei zumindest eine Mahlscheibe (5) drehbar gelagert ist und das Mahlwerk zwei Aufnahmen (4, 8) zur Aufnahme und Fixierung von je einer Mahlscheibe (5, 7) aufweist, wobei jede Mahlscheibe (5, 7) mit Befestigungsmitteln versehen ist, mittels welchen sie in der jeweiligen Aufnahme (4, 8) fixierbar ist, **dadurch gekennzeichnet, dass** die jeweilige Mahlscheibe (5, 7) mit Befestigungsmitteln (10, 11) zur Bildung eines Drehverschlusses versehen und derart in der jeweiligen Aufnahme (4, 8) aufgenommen ist, dass sie durch das beim Mahlvorgang auf sie einwirkende Drehmoment in Schliessrichtung belastet und in der Aufnahme (4, 8) fixiert wird.

2. Kaffeemühle nach Anspruch 1, **dadurch gekennzeichnet, dass** die jeweilige Aufnahme (8) eine der Mahlscheibe (7) zugewandte Abstützfläche (24) aufweist, und die Mahlscheibe (7) mit einer der Aufnahme (8) zugewandten Auflagefläche (14) versehen ist, und dass die jeweilige Mahlscheibe (7) durch das beim Mahlvorgang auf sie einwirkende Drehmoment in axialer Richtung gegen die Abstützfläche (24) der Aufnahme (8) gedrückt wird.

3. Kaffeemühle nach Anspruch 1 oder 2, **dadurch gekennzeichnet, dass** jede Mahlscheibe (4, 8) mit radialen Fortsätzen (10, 11) und die jeweilige Aufnahme (4, 8) mit korrespondierenden Ausnehmungen (12, 13) zur Bildung eines Bajonettverschlusses versehen ist.

4. Kaffeemühle nach Anspruch 2 oder 3, **dadurch gekennzeichnet, dass** die Fortsätze (10, 11) der jeweiligen Mahlscheibe (5, 7) mit einer schräg verlaufenden Keilfläche (10a, 11a) versehen sind, welche die Mahlscheibe (5, 7) beim Einsetzen in die Aufnahme (4, 8) in axialer Richtung positionieren und gegen die Abstützfläche (23) der jeweiligen Aufnahme (8) drücken.

5. Kaffeemühle nach einem der vorhergehenden Ansprüche, **dadurch gekennzeichnet, dass** die jeweilige Mahlscheibe (7) mit Zentriermitteln (21) versehen ist, welche sie in der jeweiligen Aufnahme (8) in radialer Richtung positionieren.

6. Kaffeemühle nach Anspruch 5, **dadurch gekennzeichnet, dass** die jeweilige Mahlscheibe (7) auf der der Aufnahme (8) zuzuwendenden Seite mit Zentriermitteln in Form von zumindest einer Vertiefung (21) und/oder Erhebung versehen ist, welche mit zumindest einer an der jeweiligen Aufnahme (8) angeordneten Erhebung (20) und/oder Ausnehmung zum radialen Positionieren der Mahlscheibe (7) in der Aufnahme (8) zusammenzuarbeiten bestimmt ist.

7. Kaffeemühle nach einem der vorhergehenden Ansprüche, **dadurch gekennzeichnet, dass** die Mahlscheiben (5, 7) aus einem keramischen Grundmaterial gefertigt sind.

8. Kaffeemühle nach einem der Ansprüche 1 bis 6, **dadurch gekennzeichnet, dass** die Mahlscheiben (5, 7) aus Hartmetall oder einer Hartmetalllegierung gefertigt sind.

9. Kaffeemühle nach einem der vorhergehenden Ansprüche, **dadurch gekennzeichnet, dass** die eine Mahlscheibe (7) drehfest angeordnet und die andere Mahlscheibe (5) mittels eines Elektromotors (1) angetrieben ist.

## Claims

1. Coffee mill for a coffee machine, having two coaxially arranged grinding discs (5, 7), with at least one grinding disc (5) being mounted such that it can rotate and the grinding device having two holders (4, 8) for holding and fixing one grinding disc (5, 7) in each case, with each grinding disc (5, 7) being provided with securing means which can fix the said grinding disc in the respective holder (4, 8), **characterized in that** the respective grinding disc (5, 7) is provided with securing means (10, 11) in order to form a turn-lock closure and is held in the respective holder (4, 8) in such a way that it is loaded in the closing direction by the torque acting on it during the grinding process, and is fixed in the holder (4, 8).

2. Coffee mill according to Claim 1, **characterized in that** the respective holder (8) has a supporting face (24) which faces the grinding disc (7), and the grinding disc (7) is provided with a bearing face (14) which faces the holder (8), and **in that** the respective grinding disc (7) is pressed against the supporting face (24) of the holder (8) in the axial direction by the torque acting on it during the grinding process.

3. Coffee mill according to Claim 1 or 2, **characterized in that** each grinding disc (4, 8) is provided with radial protrusions (10, 11) and the respective holder (4, 8) is provided with corresponding recesses (12, 13) in order to form a bayonet fitting.

4. Coffee mill according to Claim 2 or 3, **characterized in that** the protrusions (10, 11) of the respective grinding disc (5, 7) are provided with an obliquely running inclined face (10a, 11a), these inclined faces positioning the grinding disc (5, 7) in the axial direction when it is inserted into the holder (4, 8), and pressing it against the supporting face (23) of the respective holder (8).

5. Coffee mill according to one of the preceding claims, **characterized in that** the respective grinding disc (7) is provided with centring means (21) which position the said grinding disc in the respective holder (8) in the radial direction.

6. Coffee mill according to Claim 5, **characterized in that**, on the side which is to face the holder (8), the respective grinding disc (7) is provided with centring means in the form of at least one depression (21) and/or projection which is intended to interact with at least one projection (20) and/or recess arranged on/in the respective holder (8) in order to radially position the grinding disc (7) in the holder (8).

7. Coffee mill according to one of the preceding claims, **characterized in that** the grinding discs (5, 7) are made from a ceramic base material.

8. Coffee mill according to one of Claims 1 to 6, **characterized in that** the grinding discs (5, 7) are made from hard metal or a hard-metal alloy.

9. Coffee mill according to one of the preceding claims, **characterized in that** one grinding disc (7) is arranged such that it cannot rotate and the other grinding disc (5) is driven by means of an electric motor (1).

## Revendications

1. Moulin à café pour une machine à café, avec deux disques de mouture disposés de manière coaxiale (5, 7), au moins un disque de mouture (5) étant logé de manière à pouvoir tourner et le mécanisme de mouture comportant deux supports (4, 8) pour loger et fixer respectivement un disque de mouture (5, 7), chaque disque de mouture (5, 7) étant doté de moyens de fixation grâce auxquels il peut être fixé dans le support respectif (4, 8), **caractérisé en ce que** chaque disque de mouture (5, 7) est doté de moyens de fixation (10, 11) pour former une fermeture rorative et logé dans le support respectif (4, 8) de telle manière qu'il subit une charge dans le sens de la fermeture et est fixé dans le support (4, 8) du fait du couple qui agit sur lui lors de la mouture.

2. Moulin à café selon la revendication 1, **caractérisé en ce que** chaque support (8) comporte une surface d'appui (24) tournée vers le disque de mouture (7), **en ce que** le disque de mouture (7) est doté d'une surface d'appui (14) tournée vers le support (8), et **en ce que** chaque disque de mouture (7) est pressé dans le sens axial contre la surface d'appui (24) du support (8) du fait du couple qui agit sur lui pendant la mouture.

3. Moulin à café selon la revendication 1 ou 2, **caractérisé en ce que** chaque disque de mouture (4, 8) est doté de prolongements radiaux (10, 11) et **en ce que** chaque support (4, 8) est doté d'évidements correspondants (12, 13) pour former une fermeture à baïonnette.

4. Moulin à café selon la revendication 2 ou 3, **caractérisé en ce que** les prolongements (10, 11) de chaque disque de mouture (5, 7) sont dotés d'une surface cunéiforme oblique (10a, 11a) qui positionne le disque de mouture (5, 7) dans le sens axial lors de l'insertion dans le support (4, 8) et le pressent contre la surface d'appui (23) du support respectif (8).

5. Moulin à café selon l'une des revendications précédentes, **caractérisé en ce que** chaque disque de mouture (7) est doté de moyens de centrage (21) qui le positionnent dans le sens radial dans le support respectif (8).

6. Moulin à café selon la revendication 5, **caractérisé en ce que** chaque disque de mouture (7) est doté, sur la face à tourner vers le support (8), de moyens de centrage sous la forme d'au moins un creux (21) et/ou une élévation, destinés à fonctionner avec au moins une élévation (20) et/ou un évidement dépendant du support (8) correspondant pour assurer le positionnement radial du disque de mouture (7) dans le support (8).

7. Moulin à café selon l'une des revendications précédentes, **caractérisé en ce que** les disques de mouture (5, 7) sont fabriqués dans un matériau de base céramique.

8. Moulin à café selon l'une des revendications 1 à 6, **caractérisé en ce que** les disques de mouture (5, 7) sont fabriqués en métal dur ou dans un alliage de métaux durs.

9. Moulin à café selon l'une des revendications précédentes, **caractérisé en ce qu'**un disque de mouture (7) est disposé de manière à ne pas pouvoir tourner et **en ce que** l'autre disque de mouture (5) est entraîné au moyen d'un moteur électrique (1).
